# EUROPEAN PATENT APPLICATION

(11) **EP 4 838 421 A1**
(43) Date of publication of application: **11.11.2026**
(21) Application number: 25174857.0
(22) Date of filing: 07.05.2025
(51) Int. Cl.: G06N 3/126, G06N 10/60, G06Q 10/047, G06Q 10/0631, G06Q 50/40

(54) **METHOD AND SYSTEM FOR MANAGING A FLEET OF ELECTRIC VEHICLES USING A QUANTUM-INSPIRED OPTIMIZATION APPROACH**

(71) Applicant: Siemens Aktiengesellschaft, 80333 München (DE)
(72) Inventor: NAGAR, Deepak, 110030 New Delhi (IN); JAIN, Naman, 134118 Kurukshetra, Haryana (IN); KASHYAP, AMAN, 800025 Patna, Bihar (IN); RAMANATH, Vinay, 560070 Bengaluru, Karnataka (IN)
(74) Representative: Patentanwaltskanzlei WILHELM & BECK

(57) **Abstract**

A method for managing a fleet of electric vehicles using a quantum-inspired optimization approach is disclosed. The method involves defining objective and constraint functions associated with the fleet to achieve desired outcomes while adhering to operational conditions. A processing unit generates a solution space with multiple potential solutions, assigning equal probability to all solutions. Each solution is encoded as a quantum-inspired chromosome, represented by quantum bits (Q-bits) in quantum states. Deterministic candidate solutions are generated from the solution space using an observation function. A repair function iteratively refines candidate solutions to ensure feasibility with respect to constraints. Fitness values are assigned using a fitness function to evaluate solutions based on objectives and constraints. The fittest candidate solution is selected, and subsequent generations are produced using rotation and mutation operators to explore and diversify the solution space.

## Description

The present disclosure relates to quantum-inspired optimization system, and more particularly relates to a method and system for managing a fleet of electric vehicles using a quantum-inspired optimization approach.

The widespread adoption of electric vehicles (EVs) and other types of automobiles represents a critical step toward mitigating pollution and reducing exhaust emissions associated with conventional petroleum-based fuels. As part of global efforts to curb carbon emissions within the transportation sector, many countries are actively transitioning to electrified fleets of electric vehicles, such as commercial EVs and other vehicles. However, the environmental and operational benefits of these initiatives are closely tied to how effectively these fleets are managed and utilized by operators.

A key determinant in optimizing the utilization of fleets of electric vehicles is the development of effective route scheduling strategies. Operators must allocate routes to vehicles while taking into account factors such as battery capacity (for EVs), energy consumption, fuel efficiency, and travel time. This challenge represents a combinatorial optimization problem, which is inherently complex and classified as NP-hard. As the size of the fleet grows, the solution space expands exponentially, making it computationally expensive for conventional algorithms to explore all possibilities and identify optimal solutions.

Furthermore, as fleets continue to grow in size and complexity-driven by the expansion of logistics networks, urban mobility demands, and electrification-the limitations of existing solutions become more pronounced. The computational burden of solving large-scale scheduling problems highlights the need for methods that can efficiently explore vast solution spaces without compromising accuracy or scalability.

In summary, the challenges associated with existing solutions for fleet scheduling include high financial costs, limited flexibility, scalability constraints, and difficulties in addressing dynamic real-world factors. These issues underscore the need for innovative approaches to improve efficiency, reduce costs, and better accommodate the growing complexity of fleet management tasks.

Therefore, it an object of the present invention to provide a method and system for managing a fleet of electric vehicles using a quantum-inspired optimization approach.

The term "Quantum-Inspired Genetic Algorithm (QiGA)" refers to an advanced optimization technique that leverages principles derived from quantum computing and traditional genetic algorithms to solve complex combinatorial problems. Unlike classical genetic algorithms, which rely solely on biological evolution-inspired mechanisms such as selection, crossover, and mutation, QiGA incorporates quantum concepts such as superposition, interference, and probabilistic representation to enhance exploration and exploitation of the solution space.

The term "Objective Function" refers to a computational model used to quantify the performance, quality, or fitness of a solution within an optimization problem. It serves as the guiding metric that an algorithm seeks to optimize, either by minimizing or maximizing its value, depending on the specific problem context. For example, in fleet scheduling applications, an objective function might be designed to minimize total travel time, energy consumption, or operational costs, while maximizing delivery efficiency or service coverage.

The term "constraint function" refers to a computational rule that defines the limitations, restrictions, or conditions that must be satisfied by any feasible solution to an optimization problem. Unlike the objective function, which guides the optimization process toward a desired goal, constraint functions impose boundaries on the solution space, ensuring that solutions comply with predefined requirements or real-world conditions. For example, in fleet scheduling applications, a constraint function might ensure that each vehicle does not exceed its maximum carrying capacity, that delivery times fall within specific windows, or that electric vehicles have sufficient battery charge to complete their routes.

The term "quantum-inspired chromosome" refers to a computational construct within evolutionary algorithms that leverages principles derived from quantum mechanics, particularly superposition and probabilistic representation, to enhance optimization and problem-solving capabilities. Unlike classical chromosomes in genetic algorithms, which represent solutions in fixed binary, integer, or real-valued formats, quantum-inspired chromosomes encode solutions as probability amplitudes, allowing them to exist in a state of superposition. This enables simultaneous exploration of multiple solution spaces, significantly improving convergence rates in complex optimization problems. In this context, each quantum-inspired chromosome represents a probabilistic encoding of potential vehicle routes or schedules. For example, consider a scenario where a fleet of delivery vehicles must efficiently distribute packages across multiple destinations while minimizing fuel consumption and travel time. Instead of assigning fixed routes to each vehicle, a quantum-inspired chromosome can encode multiple possible route configurations as probability amplitudes.

The term "Quantum bits (Q-bits)" refers to the fundamental units of information in quantum computing, analogous to classical bits but with unique properties derived from quantum mechanics. Unlike classical bits, which can exist in one of two definite states-0 or 1-Q-bits can exist in a superposition of both states simultaneously, represented as a linear combination of 0 and 1 with associated probability amplitudes. This property enables Q-bits to process and encode exponentially more information than classical bits.

The term "observation function" refers to a computational mechanism that extracts, evaluates, or interprets specific attributes, states, or outputs from a given system, process, or algorithm, often in the context of optimization, decision-making, or simulation. In quantum systems, the observation function is particularly significant as it determines the collapse of probabilistic states into a defined outcome based on measurement criteria. In practical applications, such as fleet management, an observation function can assess the performance of a vehicle routing configuration by evaluating metrics like fuel efficiency, delivery time, and route congestion, ultimately guiding the optimization process toward the best solution.

The term "repair function" refers to a computational mechanism designed to modify or correct solutions within an optimization process to ensure they meet predefined constraints or requirements. In systems such as genetic algorithms, quantum-inspired algorithms, or other heuristic approaches, solutions generated during the search process may violate problem-specific rules or constraints, rendering them invalid or suboptimal. The repair function intervenes by systematically adjusting these solutions to restore feasibility without drastically altering their underlying structure or intent. For example, in a vehicle routing optimization problem, a repair function may adjust a route configuration that exceeds a vehicle's maximum capacity by redistributing deliveries among other vehicles or revising the sequence of stops to comply with time windows.

The term "fitness function" refers to a computational mechanism used to evaluate and quantify the quality or performance of a solution within an optimization problem. It assigns a numerical value, or "fitness value," to each candidate solution based on how well it satisfies the objectives or constraints of the problem being solved. The fitness function serves as the guiding metric for selecting and improving solutions in iterative algorithms, such as genetic algorithms, quantum-inspired algorithms, or other heuristic approaches. For example, in a vehicle routing optimization problem, the fitness function may evaluate a fleet's route configurations based on criteria such as minimizing total distance traveled, reducing fuel consumption, and meeting delivery deadlines. Solutions with higher fitness values represent more optimal configurations and are prioritized for further refinement or reproduction in subsequent iterations.

The term "rotation operator" refers to a computational mechanism that alters the state or orientation of a variable, vector, or object within a defined space, often used to explore solution landscapes or manipulate states in optimization problems and quantum systems. In quantum-inspired algorithms, a rotation operator is commonly employed to adjust the probability amplitudes of quantum bits (Q-bits), enabling the exploration of new solution states while maintaining the principles of quantum superposition. For instance, in quantum-inspired optimization algorithms, a rotation operator may be applied to modify the phase or angle of Q-bits in a search space, helping the system converge toward optimal solutions by influencing the likelihood of certain states being selected.

The term "mutation operator" refers to a computational mechanism used in optimization algorithms, such as genetic algorithms, to introduce random variations into candidate solutions. The purpose of a mutation operator is to maintain genetic diversity within the solution population and prevent premature convergence to local optima by exploring new areas of the solution space. In quantum-inspired algorithms, a mutation operator may adjust the probability amplitudes of quantum bits (Q-bits) to explore new solution states. By introducing controlled randomness, mutation operators help ensure robust exploration of the search space, enhancing the algorithm's ability to find global optima and solve complex optimization problems.

The method comprises defining one or more objective functions and one or more constraint functions associated with the fleet of electric vehicles, wherein the one or more objective functions comprise a desired outcome corresponding to the fleet of the electric vehicles and the one or more constraint functions comprise one or more conditions associated with the fleet of the electric vehicles.

In an embodiment, the one or more objective functions include maximizing the fleet utilization by optimizing the total distance covered by the fleet of electric vehicles.

The method comprises generating, by a processing unit using an optimization model, a solution space comprising a plurality of solutions for managing the fleet of electric vehicles.

The method comprises assigning, by the processing unit using the optimization model, equal probability to all solutions in the solution space.

The method comprises encoding, by the processing unit, each of the solutions as a quantum-inspired chromosome comprising a plurality of quantum bits (Q-bits), each Q-bit represented by a quantum state.

The method comprises generating, by the processing unit using an observation function, a first generation of deterministic candidate solutions from the plurality of solutions.

In an embodiment, the observation function generates the deterministic candidate solutions by collapsing the quantum-inspired chromosomes into classical solutions.

The method comprises refining, by the processing unit using a repair function, each of the candidate solutions by iteratively adjusting the candidate solution to ensure feasibility with respect to the constraint functions.

In an embodiment, the repair function iteratively adjusts the genome sequence of the quantum-inspired chromosomes to ensure compliance with the constraint functions while minimizing deviations from the optimal solution.

The method comprises evaluating, by the processing unit using a fitness function, the fitness of each of the candidate solutions by assigning a fitness value to each of the candidate solutions to meet the objective functions and constraint functions.

In an embodiment, assigns a fitness value to each candidate solution based on the extent to which the candidate solution satisfies the one or more objective functions.

In an embodiment, penalizes any candidate solution that violates the one or more constraint functions by assigning a low or zero fitness value.

The method comprises selecting, by the processing unit, the fittest candidate solution having the highest fitness value from the generation of candidate solutions.

The method comprises generating, by the processing unit, the next generation of candidate solutions for selecting the fittest candidate solution from the next generation of candidate solutions.

The method comprises exploring the solution space using a rotation operator on the solution space based on the fitness value of each of the candidate solutions from the first generation of candidate solutions, wherein the rotation operator enables identifying optimal solutions around the region of the fittest solution in the solution space.

In an embodiment, the rotation operator is represented by a Q-gate, wherein the rotation operator dynamically adjusts the search directionality within the solution space and updates the probability amplitudes of the Q-bits in the quantum-inspired chromosomes based on the fitness value of the individual solution and the generation number.

The method comprises applying a mutation operator on the first generation of candidate solutions in the solution space, wherein the mutation operator randomly alters the values of the candidate solutions to explore diverse solutions in the solution space.

In an embodiment, the mutation operator randomly alters the values of the candidate solutions by introducing changes to the genome sequence, thereby promoting diversity in the solution space and preventing premature convergence to a local optimum.

The method comprises recording, by the processing unit, the fittest candidate solution from each generation of the candidate solutions in a list of solutions.

The method comprises selecting, by the processing unit, the candidate solution with the highest fitness value from the list of solutions as the optimal solution.

The object of the present invention is achieved by a data processing device for managing a fleet of electric vehicles using a quantum-inspired optimization approach. The data processing device comprises one or more processing units, and a memory. The memory is communicatively coupled to the one or more processing units. The memory comprises a module stored in the form of machine-readable instructions executable by the one or more processing units, wherein the module is configured to perform the above method steps.

The object of the present invention is achieved by a system for managing a fleet of electric vehicles using a quantum-inspired optimization approach. The system comprises the fleet of electric vehicles, a data processing device, and a communication network. The data processing device is communicatively coupled to the one or more fleet of electric vehicles via the communication network, wherein the data processing device is configured to perform the above method steps.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a system 100 for managing a fleet of electric vehicles (102a-n) using a quantum-inspired optimization approach, in accordance with an embodiment of the present invention;
- FIG 2: illustrates an architecture of the data processing device 104, in accordance with an embodiment of the present invention;
- FIG 3: is a flowchart 300 of a method for managing a fleet of electric vehicles (102a-n) using a quantum-inspired optimization approach, in accordance with an embodiment of the present invention; and
- FIG 4: illustrates a polar plot 400 of the rotational operator for Q-bit individuals, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

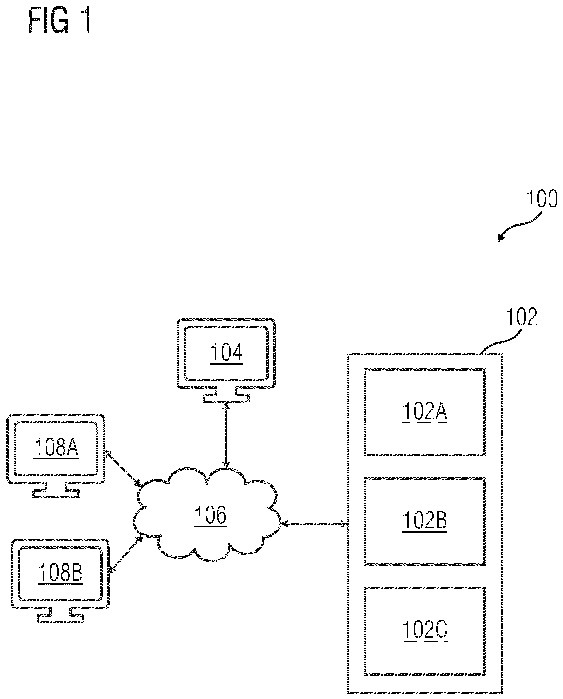

FIG. 1 illustrates a system 100 for managing a fleet of electric vehicles (102a-n) using a quantum-inspired optimization approach, in accordance with an embodiment of the present invention. The system 100 comprises a fleet of electric vehicles (102a-n), a data processing device 104, a plurality of user devices (108a-n), and a communication network 106. The communication network 106 communicatively connects the fleet of electric vehicles (102a-n), the data processing device 104, and the user device 108 with each other to share data between them.

The fleet of electric vehicles (102a-n) may comprise various types of transportation systems, including automobiles, vehicles, and other forms of mobility solutions used across different industries. These electric vehicles (102a-n) may include passenger cars, SUVs, trucks, and vans utilized for personal or commercial purposes, as well as electric vehicles such as electric cars, and buses. Additionally, the electric vehicles (102a-n) may include trains, encompassing passenger trains, freight trains, metro systems, and high-speed rail, along with buses used for public or private transportation, whether traditional fuel-based or electric. Other forms of mobility may include motorcycles, scooters, and electric scooters, as well as drones or unmanned aerial vehicles. Water-based transportation such as boats, ferries, cargo ships, and autonomous marine vessels may also be part of the fleet, alongside aircraft such as airplanes, helicopters, and unmanned aerial systems. The fleet can further extend to autonomous vehicles, including self-driving cars and robotic delivery systems, as well as industrial and construction vehicles like forklifts, cranes, bulldozers, and other heavy machinery.

The data processing device 104 is connected to one or more electric vehicles (102a-n) via a communication network (e.g., Internet). The one or more electric vehicles (102a-n) may include electric vehicles, vehicles, autonomous vehicles, drones, robotic delivery units, fleet trucks, public transportation systems, or any other mobile entities involved in optimization and scheduling problems. The one or more electric vehicles (102an) may continuously measure and transmit real-time data to the data processing device 104 via the communication network for processing and controlling operations of the one or more electric vehicles (102an).

In an alternate embodiment, the one or more electric vehicles (102a-n) may be connected to an intermediary device or gateway or hub (not shown) for transmitting the real-time data. In such a case, the real-time data is then forwarded to the data processing device 104 by the intermediary device or gateway or hub.

The data processing device 104 may be a public cloud, a private cloud, and/or a hybrid cloud configured to provide dedicated cloud services to its users. Alternatively, the data processing device 104 may be a classic computer systems capable of processing quantum-inspired algorithms.

Further, the data processing device 104 is also connected to user devices (108a-n) via the communication network. The user devices (108a-n) can access the data processing device 104 for managing the fleet of electric vehicles (102a-n). In an embodiment, the user devices (108a-n) can be a laptop computer, desktop computer, tablet computer, smartphone, and the like. The user devices (108a-n) can access applications (such as enabling users to manage the operations of the fleet of the electric vehicles (102a-n)) via a web browser. Further, the user devices (108a-n) may install a plug-in for accessing the fleet of electric vehicles (102a-n) on the data processing device 104 via different simulation software running on the user devices (108a-n).

As used herein the communication network 106, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a sixth generation (6G) mobile communication network, a long-term evolution (LTE) mobile communication network, a public telephone network, a local area network, a wide area network, an internet connection network, an infrared communication network, or a network formed from any combination of these networks.

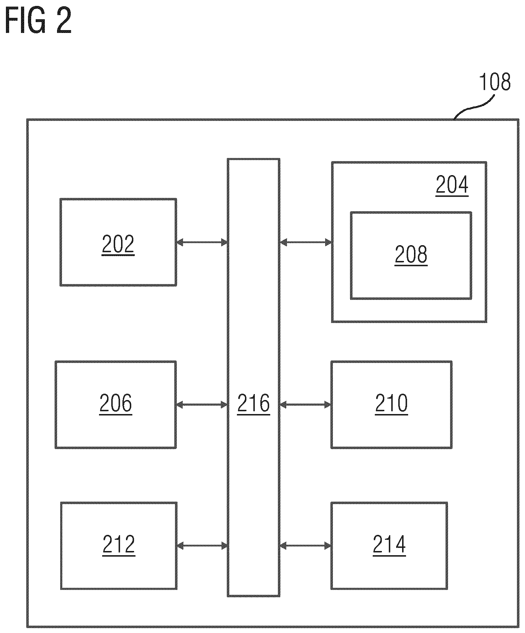

FIG. 2 illustrates an architecture of the data processing device 104, in accordance with an embodiment of the present invention. The data processing device 104 comprises a processing unit 202, a memory 204, a database 206, a network interface 210, an input unit 212, an output unit 214, and a bus 216.

The memory 204 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 204 may include an optimization model 208 stored in the form of machine-readable instructions executable by the one or more processing unit 202. The memory may include multiple modules, wherein the modules, when executed, may enable managing the fleet of electric vehicles (102a-n).

The database 206 may include removable storage and/or non-removable storage including, but not limited to, magnetic storage, optical disk storage, and/or tape storage. The database 206 may provide non-volatile storage of computer-executable instructions and other data.

The database 206 may store computer-executable code, instructions, or the like that may be loadable into the memory and executable by the processing unit 202 to cause the processing unit 202 to perform or initiate various operations such as managing the fleet of electric vehicles (102a-n) using quantum-inspired optimization approach. The database 206 may store relevant data that may be copied to memory for use by the processing unit 202 during the execution of the computer-executable instructions. Moreover, output data generated as a result of execution of the computer-executable instructions by the processing unit 202 may be stored initially in memory and may ultimately be copied to the database for non-volatile storage.

More specifically, the database 206 is configured to access the memory; and one or more program module, applications, engines, managers, computer-executable code, scripts, or the like such as, for example, the various modules of the memory. Any of the components depicted as being stored in the database may include any combination of software, firmware, and/or hardware. The software and/or firmware may include computer-executable instructions (e.g., computer-executable program code) that may be loaded into the memory for execution by one or more of the processing unit 202 to perform any of the corresponding operations described earlier.

The processing unit 202 may be configured to access the memory and execute computer-executable instructions loaded therein. For example, the processing unit 202 may be configured to execute computer-executable instructions of the various program module, applications, engines, managers, or the like to cause or facilitate various operations to be performed in accordance with one or more embodiments of the disclosure. The processing unit 202 may include any suitable processing unit 202 capable of accepting data as input, processing the input data in accordance with stored computer-executable instructions, and generating output data. The processing unit 202 may include any type of suitable processing unit 202 including, but not limited to, a central processing unit 202, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processing unit 202 may have any suitable microarchitecture design that includes any number of constituent components such as, for example, registers, multiplexers, arithmetic logic units, cache controllers for controlling read/write operations to cache memory, branch predictors, or the like. The microarchitecture design of the processing unit 202 may be capable of supporting any of a variety of instruction sets.

The processing unit 202 is configured for obtaining one or more requirements associated with a fleet of electric vehicles (102a-n) from one or more data sources. The one or more requirements may comprise a desired distance to be covered, desired routes to be covered, a desired energy consumption level, a desired performance level, a desired moving object type, and a desired capacity of a moving object.

The processing unit 202 is configured for defining one or more objective functions and one or more constraint functions associated with the fleet of electric vehicles (102a-n) based on the obtained one or more requirements. The one or more objective functions comprise a desired outcome corresponding to the fleet of the electric vehicles (102a-n) and the one or more constraint functions comprise one or more conditions associated with the fleet of the electric vehicles (102a-n). The one or more conditions may comprise, for example, but not limited to,
constraint #1: one route is assigned to less than or equal to one EV cab,
constraint #2: multiple routes are assigned to an EV cab depending upon its battery range,
constraint #3: no overlapping routes are assigned to a cab,
constraint #4: an EV cab is assigned to a route based upon passenger requirements, such as a preference for eco-friendly transportation, and
constraint #5: certain high-demand routes, such as airport or business district routes, are prioritized for EV cabs with extended range or rapid charging capabilities.

The processing unit 202 is configured to generate, using an optimization model, a solution space comprising a plurality of solutions for managing the fleet of electric vehicles (102a-n). Further, the processing unit 202 assigns, using the optimization model, equal probability to all solutions in the solution space.

The processing unit 202 encodes each of the solutions as a quantum-inspired chromosome comprising a plurality of quantum bits (Q-bits), each Q-bit represented by a quantum state. In quantum mechanics, a Q-bit can exist in a superposition of two states, typically denoted as |0〉 and |1〉, with associated probability amplitudes. This unique property allows quantum-inspired algorithms to explore multiple possibilities simultaneously, enhancing the solution search process.

The processing unit 202 generates, using an observation function, a first generation of deterministic candidate solutions from the plurality of solutions. In this context, the observation function serves as a mechanism to transition quantum-inspired solutions represented by probabilistic or superposed states into concrete, deterministic solutions that can be evaluated and acted upon.

The processing unit 202 refines, unit using a repair function, each of the candidate solutions by iteratively adjusting the candidate solution to ensure feasibility with respect to the constraint functions. This step is essential in optimization where candidate solutions must adhere to specific rules or limitations to be considered feasible. The repair function acts as a corrective mechanism, modifying solutions that violate constraints so they can be evaluated and potentially selected as viable options.

The processing unit 202 evaluates, using a fitness function, the fitness of each of the candidate solutions by assigning a fitness value to each of the candidate solutions to meet the objective functions and constraint functions.

The processing unit 202 selects the fittest candidate solution having the highest fitness value from the generation of candidate solutions.

The generating, by the processing unit 202, the next generation of candidate solutions for selecting the fittest candidate solution from the next generation of candidate solutions using a rotation operator and a mutation operator.

The processing unit 202 selects the candidate solution with the highest fitness value from the list of solutions as the optimal solution. The list of solutions comprises fittest candidate solution from each generation of candidate solutions.

The input unit 212 and the output unit 214 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 210 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 216 may include at least one of a system bus, a memory bus, an address bus, or a message bus, and may permit the exchange of information (e.g., data (including computer-executable code), signaling, etc.) between various components of the data processing device 104 108. The bus may include, without limitation, a memory bus or a memory controller, a peripheral bus, an accelerated graphics port, and so forth.

Those skilled in the art will recognize that, for simplicity and clarity, the full structure and operation of all data processing systems suitable for use with the present disclosure is not being depicted or described herein. Instead, only so much of a data processing device 104 as is unique to the present disclosure or necessary for an understanding of the present disclosure is depicted and described. The remainder of the construction and operation of the data processing device 104 may conform to any of the various current implementation and practices known in the art.

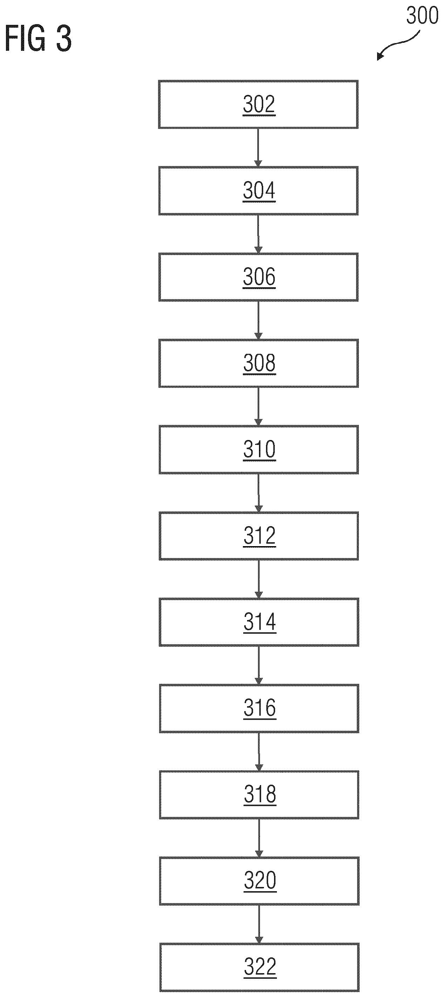

FIG. 3 is a flowchart 300 of a method for managing a fleet of electric vehicles (102a-n) using a quantum-inspired optimization approach, in accordance with an embodiment of the present invention. At step 302, the method comprises determining one or more objective functions and one or more constraint functions associated with the fleet of electric vehicles (102a-n) based on the obtained one or more requirements. The one or more objective functions comprise a desired outcome corresponding to the fleet of the electric vehicles (102a-n) and the one or more constraint functions comprise one or more conditions associated with the fleet of the electric vehicles (102a-n). The objective function may be defined based on one or more requirements for managing the fleet of objects such as desired distance to be covered, desired routes to be covered, a desired energy consumption level, a desired performance level, so on and so forth.

At step 304, the processing unit 202 generates, using an optimization model 208, a solution space comprising a plurality of solutions for managing the fleet of electric vehicles (102a-n).

At step 306, the processing unit 202, using the optimization model 208, assigns equal probability to all solutions in the solution space. This refers to the concept of superposition in quantum computing, where all possible solutions are treated as equally likely until further computations or constraints collapse the superposition to the optimal solution. For example, in EV fleet management, solutions represent different combinations of routing, charging, and vehicle allocation. Initially, the processing unit 202 assigns equal probabilities to each of these solutions, treating them as equally viable options in the superposition state.

At step 308, the processing unit 202 encodes each of the solutions as a quantum-inspired chromosome comprising a plurality of quantum bits (Q-bits), each Q-bit represented by a quantum state. Unlike classical bits, Q-bits can exist in a superposition state, representing both 0 and 1 simultaneously, which allows for efficient exploration of a vast solution space. In the context of EV fleet management, this approach enables encoding multiple fleet management scenarios into quantum-inspired chromosomes for faster optimization and decision-making.

A chromosome represents a potential solution to a problem, typically encoded as a string of variables or parameters. In quantum-inspired computing, each parameter (or decision variable) in the solution is encoded as a Q-bit. A Q-bit is represented by a quantum state, which is a combination of 0 and 1 with associated probabilities, expressed mathematically as: $\left|\left.ψ\right〉\right. = α \left|\left.0\right〉\right. + β \left|\left.1\right〉\right. ,$ where:
|Ψ〉 is the quantum state,
α is the amplitude/probability of the state being 0,
β is the amplitude/probability of the state being 1,
and |α|² + |β|² = 1 (normalization condition).

When encoding solutions, each decision variable (e.g., route assignment, charging schedule, etc.) is represented by a Q-bit. A collection of Q-bits forms a quantum-inspired chromosome, which represents a potential solution in the solution space.

Solution 1 Chromosome:
- Q-bit 1: Route assignment for Vehicle A (Zone 1 or Zone 2, represented as a superposition of both options).
- Q-bit 2: Charging station for Vehicle A (Station X or Station Y, represented as a superposition of both options).
- Q-bit 3: Charging schedule for Vehicle A (Peak hours or Off-peak hours, represented as a superposition).
- Q-bit 4: Utilization of Vehicle A (Active or idle, represented as a superposition).

At step 310, the processing unit 202, using an observation function, generates a first generation of deterministic candidate solutions from the plurality of solutions. In other words, a probabilistic or quantum-inspired representation of solutions are transformed to a set of deterministic solutions that can be evaluated and refined. The observation function collapses the probabilistic state (e.g., quantum superposition or probabilistic encoding) into a concrete set of candidate solutions. The observation function may generate the deterministic candidate solutions based on predefined criteria, such as optimization objectives, constraints, or the like.

At step 312, the processing unit 202 using a repair function, refines each of the candidate solutions by iteratively adjusting the candidate solution to ensure feasibility with respect to the constraint functions. The repair function ensures that each candidate solution satisfies all constraint functions, which define the boundaries or rules of the problem (e.g., operational limits, resource availability, scheduling conflicts).

This repair mechanism ensures that any modifications made to the genome sequence do not result in excessive deviation from the optimum solution. By carefully adjusting gene values, the algorithm maintains the integrity of the search process while adhering to the problem's constraints, thereby increasing the likelihood of convergence toward a high-quality solution.

At step 314, the processing unit 202 using a fitness function, evaluates the fitness of each of the candidate solutions by assigning a fitness value to each of the candidate solutions to meet the objective functions and constraint functions. A fitness function quantifies how well each candidate solution performs with respect to the objective functions (goals of the optimization problem) and constraint functions (rules or limitations imposed on the problem). The fitness function assigns a fitness value to each candidate solution, providing a measure of its quality or suitability. Solutions that score higher are closer to the optimal configuration, while those with lower scores may violate constraints or fail to meet objectives.

In EV fleet management system, candidate solutions are generated and evaluated using a fitness function, which assigns a numeric score based on objective satisfaction (e.g., efficiency, cost minimization) and constraint adherence (e.g., avoiding overcapacity or deadline violations). Solutions with higher fitness values are ranked and retained for further refinement, while poorly performing solutions are penalized and discarded or repaired. For example, a candidate solution may optimize off-peak charging schedules and efficient routes but be penalized for insufficient battery charge, resulting in a reduced fitness score.

At step 316, the processing unit 202 selects the fittest candidate solution, the one with the highest fitness value, from the current generation of solutions. This solution represents the best-performing configuration among all candidates based on its ability to meet the objective functions (e.g., minimizing costs, delivery time, or energy consumption) and adhere to constraint functions (e.g., battery capacity, charging station availability, delivery deadlines).

The processing unit 202 may compare the fitness values of all candidate solutions in the current generation. The candidate solution with the highest fitness value is selected as the fittest solution. This solution is considered the most optimal configuration among the current generation.

At step 318, the processing unit 202 iteratively generates the next generation of candidate solutions for selecting the fittest candidate solution from the next generation of candidate solutions. In iterative processes, after selecting the fittest candidate solution from the current generation, the processing unit 202 generates the next generation of candidate solutions.

The next generation of candidate solutions is generated by exploring the solutions space using a rotation operator on the solution space based on the fitness value of the each of the candidate solutions from the first generation of candidate solutions. The rotation operator (Q-gate) and mutation operator are used to increase solution quality (exploration of the search space) until the current generation is less than the maximum generation limit specified for convergence.

The rotation operator enables in identifying optimal solution around the region of the fittest solution in the solution space. The rotation operator adjusts or "rotates" the candidate solutions around the region of the fittest solution. This operator essentially helps refine the search by focusing on the neighborhood or vicinity of the best-performing solutions, where optimal solutions are likely to exist.

Q-gate (*θᵢ*) is a rotational operator, that updates the ${α}_{j}^{t}$ and ${β}_{j}^{t}$ based on the fitness of the individual generated over the evolution as given below. $Δ {θ}_{i} = {θ}_{max} - \left[\left({θ}_{max}-{θ}_{min}\right)∗{Generation}_{T}/{Generation}_{max}\right]$ Where:
Δθ_i is the angle of rotation; and
θ_max & θ_min are pre-selected data,
Generation_{T} is the generation at T^{th} iteration,
Generationₘₐₓ is the maximum number of limits given for total generation evolution

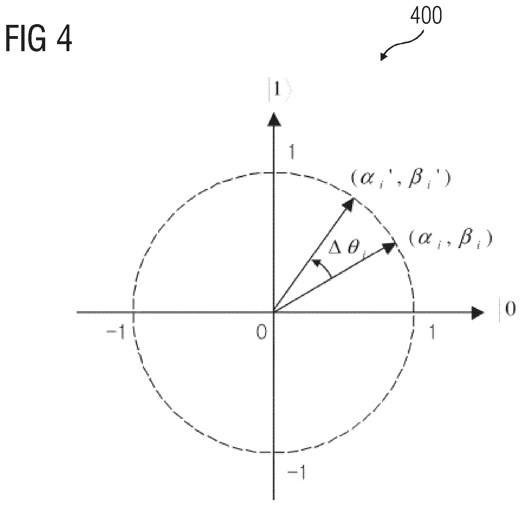

FIG. 4 illustrates a polar plot 400 of the rotational operator for Q-bit individuals, in accordance with an embodiment of the present invention. In FIG. 4, α and β represent the probability amplitude a function θ with which upon measuring whether the state will collapse to '0', or '1'. (|α|2 + |β|2 = 1, where |α|2 is the probability of getting a '0' and |β|2 is the probability of getting a '1').

Further, the mutation operator is applied on the first generation of candidate solutions in the solutions space, wherein the mutation operator randomly alters the values of the candidate solutions to explore the diverse solutions in the solutions space. Mutation allows the algorithm to escape local optima (suboptimal solutions that appear optimal within a limited region of the solution space) by introducing randomness. The random changes are typically small and controlled to ensure that the mutated solution remains feasible within the problem's constraints.

After applying the mutation operator to the first generation of candidate solutions, a new generation of candidate solutions is produced. These new solutions are then evaluated using the fitness function, and the process continues iteratively until convergence toward an optimal solution.

At step 320, the processing unit 202 records the fittest candidate solution from each generation of the candidate solutions in a list of solutions B(t).

At step 322, the processing unit 202 selects the candidate solution with the highest fitness value from the list of solutions as the optimal solution. After generating multiple candidate solutions across several iterations or generations, the processing unit 202 selects the solution with the highest fitness value from the list of solutions as the optimal solution.

The fittest solution among the plurality of generations of candidate solutions is used by the processing unit to generate an optimized schedule for managing the fleet of electric vehicles.

The Quantum-inspired Genetic Algorithm (QiGA) stands out as a faster algorithm compared to its conventional counterparts due to its ability to leverage quantum principles, such as superposition. This unique feature allows the algorithm to explore multiple potential solutions simultaneously, significantly enhancing computational efficiency and reducing the time required to find optimal solutions. Additionally, QiGA demonstrates adaptability to emerging quantum hardware, paving the way for further speedup and scalability as quantum computing technology matures. Unlike commercial solvers that rely heavily on classical computing architectures, QiGA's design is forward-compatible with quantum platforms, positioning it as a pioneering tool for solving complex optimization problems in the era of quantum computing.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of references

100 - system for managing a fleet of electric vehicles using a quantum-inspired optimization approach
102a-102n - fleet of electric vehicles
104 - data processing device
106 - Communication network
108a-n - User devices
202 - Processing unit
204 - Memory
206 - Database
208 - Modules
210 - Network interface
212 - Input unit
214 - Output unit
216 - Bus
300 - flowchart of a method for managing a fleet of electric vehicles using a quantum-inspired optimization approach
400 - polar plot of the rotational operator for Q-bit individuals

## Claims

1. A method for managing a fleet of electric vehicles using a quantum-inspired optimization approach, comprising:
receiving as an input, by a processing unit (202), one or more requirements associated with a fleet of electric vehicles (102a-n) from one or more data sources;
defining one or more objective functions and one or more constraint functions associated with the fleet of electric vehicles, wherein the one or more objective functions comprise a desired outcome corresponding to the fleet of the electric vehicles and the one or more constraint functions comprise one or more conditions associated with the fleet of the electric vehicles;
generating, by a processing unit using an optimization model, a solution space comprising a plurality of solutions for managing the fleet of electric vehicles;
assigning, by the processing unit using the optimization model, equal probability to each of the solutions;
encoding, by the processing unit, each of the solutions as a quantum-inspired chromosome comprising a plurality of quantum bits (Q-bits), each Q-bit represented by a quantum state;
generating, by the processing unit, using an observation function configured to convert probabilistic states of solution to deterministic solutions, a first generation of deterministic candidate solutions from the plurality of solutions;
refining, by the processing unit, using a repair function, each of the candidate solutions, wherein the repair function iteratively adjusts the candidate solution to ensure feasibility with respect to the constraint functions;
evaluating, by the processing unit, using a fitness function, the fitness of each of the candidate solutions by assigning a fitness value to each of the candidate solutions to meet the one or more objective functions and the one or more constraint functions;
determining, by the processing unit, the fittest candidate solution from the generation of candidate solutions based on a fitness value of each of the candidate solutions;
iteratively generating, by the processing unit, subsequent generations of candidate solutions for selecting the fittest candidate solution from each generation of candidate solutions;
selecting, by the processing unit, the fittest candidate solution among the plurality of generations of candidate solution; and
generating, by the processing unit, an optimized schedule for managing the fleet of electric vehicles based on the selected fittest candidate solution among the plurality of generations of candidate solutions.

2. The method according to any of the preceding claims, further comprising:
recording, by the processing unit, the fittest candidate solution from each generation of the candidate solutions in a list of solutions; and
selecting, by the processing unit, the candidate solution with the highest fitness value from the list of solutions as the optimal solution.

3. The method according to any of the preceding claims, wherein the one or more objective functions include maximizing the fleet utilization by optimizing the total distance travelled by the fleet of electric vehicles.

4. The method according to any of the preceding claims, wherein the observation function generates the deterministic candidate solutions by collapsing the quantum-inspired chromosomes into classical solutions.

5. The method according to any of the preceding claims, wherein the repair function iteratively alters the genome sequence of the quantum-inspired chromosomes to ensure compliance with the constraint functions while minimizing deviations from the optimal solution.

6. The method according to any of the preceding claims, wherein the fitness function:
assigns a fitness value to each candidate solution based on the extent to which the candidate solution satisfies the one or more objective functions; and
penalizes any candidate solution that violates the one or more constraint functions by assigning a low or zero fitness value.

7. The method according to any of the preceding claims, wherein the rotation operator, represented by a Q-gate, dynamically adjusts the search directionality within the solution space and updates the probability amplitudes of the Q-bits in the quantum-inspired chromosomes based on the fitness value of the individual solution and the generation number.

8. The method according to any of the preceding claims, wherein the mutation operator randomly alters the values of the candidate solutions by introducing changes to the genome sequence, thereby promoting diversity in the solution space and preventing premature convergence to a local optimum.

9. The method according to any of the preceding claims, wherein, a subsequent generation of candidate solutions is generated by:
exploring the solutions space using a rotation operator on the solution space based on the fitness value of the each of the candidate solutions from the previous generation of candidate solutions, wherein the rotation operator enables in identifying optimal solution around the region of the fittest solution of the previous generation in the solution space; and
applying a mutation operator on the previous generation of candidate solutions in the solutions space, wherein the mutation operator randomly alters the values of the candidate solutions of the previous generation to explore the diverse solutions in the solutions space.

10. A data processing device for managing a fleet of electric vehicles using a quantum-inspired optimization approach, wherein the data processing device comprises:
one or more processing units; and
a memory communicatively coupled to the one or more processing units, the memory comprising a module stored in the form of machine-readable instructions executable by the one or more processing units, wherein the module is configured to perform the method steps according to claims 1 to 9.

11. A system for managing a fleet of electric vehicles using a quantum-inspired optimization approach, wherein the system comprises:
the fleet of electric vehicles; and
a data processing device communicatively coupled to the one or more fleet of electric vehicles via a communication network, wherein the data processing device is configured to perform a method according to any of the claims 1-9.

12. A computer program product comprising machine-readable instructions stored therein that, when executed by one or more processing units, cause the one or more processing units to perform a method according to any of the claims 1-9.
